(19)

**Europäisches Patentamt**
**European Patent Office**
**Office européen des brevets**

(11)  **EP 3 877 163 B1**

(12)  # EUROPÄISCHE PATENTSCHRIFT

(45)  Veröffentlichungstag und Bekanntmachung des Hinweises auf die Patenterteilung:
**01.05.2024  Patentblatt 2024/18**

(21)  Anmeldenummer: **19782557.3**

(22)  Anmeldetag: **01.10.2019**

(51)  Internationale Patentklassifikation (IPC):
***B29C 73/16*** *(2006.01)*

(52)  Gemeinsame Patentklassifikation (CPC):
**B29C 73/166;** B29L 2030/00

(86)  Internationale Anmeldenummer:
**PCT/EP2019/076508**

(87)  Internationale Veröffentlichungsnummer:
**WO 2020/094299 (14.05.2020 Gazette 2020/20)**

(54)  **VERTEILERVORRICHTUNG, SYSTEM UND VERFAHREN ZUM ABDICHTEN UND VERWENDUNG EINER DOSIEREINHEIT**

DISTRIBUTOR DEVICE, SYSTEM, AND METHOD FOR SEALING AND USING A METERING UNIT

DISPOSITIF DE DISTRIBUTION, SYSTÈME ET PROCÉDÉ DE COLMATAGE, ET UTILISATION D'UNE UNITÉ DE DOSAGE

(84)  Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30)  Priorität: **08.11.2018   DE 102018219038**

(43)  Veröffentlichungstag der Anmeldung:
**15.09.2021   Patentblatt 2021/37**

(73)  Patentinhaber: **Continental Reifen Deutschland GmbH**
**30175 Hannover (DE)**

(72)  Erfinder:
• **DAHLKE, Markus**
**30165 Hannover (DE)**

• **SCHLOSSER, Florian**
**30165 Hannover (DE)**
• **BECKER, Raymond**
**30165 Hannover (DE)**
• **BAUHUS, Andreas**
**30165 Hannover (DE)**
• **GERLACH, Markus**
**30165 Hannover (DE)**

(74)  Vertreter: **Continental Corporation**
**c/o Continental AG**
**Intellectual Property**
**Postfach 169**
**30001 Hannover (DE)**

(56)  Entgegenhaltungen:
**EP-A2- 1 419 876     DE-A1- 10 314 075
US-A- 4 765 367**

**Beschreibung**

Die Erfindung betrifft eine Verteilervorrichtung zur Erzeugung eines Aerosols umfassend sowohl Gas als auch Dichtmittel, wobei die Verteilervorrichtung mindestens einen Gasanschluss zur Verbindung mit mindestens einer Druckluftquelle, mindestens einen Dichtmittelanschluss zur Verbindung mit mindestens einem Dichtmittelbehälter und ein oder mehr als ein Verbindungselemente zur Verbindung mit einem Fahrzeugluftreifen aufweist. Die Erfindung betrifft auch ein System zum Abdichten und Aufpumpen von Fahrzeugluftreifen und ein Verfahren zum Abdichten von Fahrzeugluftreifen oder aufblasbaren technischen Gummiartikeln sowie die Verwendung einer Dosiereinheit zum Erzeugen eines Aerosols.

Bei Reifenpannen besteht in aller Regel das Problem, dass - wie beispielsweise bei einem PKW bisher üblich - ein mit Luft gefüllter und auf einer Felge montierter Reservereifen mitgeführt werden muss, der dann mit dem Pannenreifen ausgetauscht werden muss. Anschließend muss der defekte Pannenreifen in dem für den Reservereifen vorgesehenen Stauraum im Fahrzeug befestigt werden und später einer Reparatur unterzogen werden. Hierzu ist es oft notwendig, ein beladenes Fahrzeug auszuräumen, um an den entsprechenden Stauraum für das Reserverad zu gelangen, und zusätzlich auch das Fahrzeug selbst mit Wagenhebern aufzubocken und eine umständliche Reparaturarbeit durchzuführen.

Um diese Nachteile zu vermeiden, sind bereits seit längerer Zeit Reparatursätze oder Pannensets zur temporären Reparatur des Reifens bekannt, die einen Kompressor, ein Dichtmittel, die entsprechenden Verbindungsschläuche und die notwendigen Kabelanschlüsse zur Energiezufuhr sowie Bedienelemente beinhalten und somit einen ständig einsetzbaren und vollständigen Reparatursatz als Ersatz zum Reserverad darstellen.

Bei solch bekannten Pannensets wird im Falle einer Reifenpanne nach Start des Luftkompressors das Dichtmittel aus dem entsprechenden Dichtmittelbehälter in den beschädigten Reifen gefördert. In einem zweiten Prozessschritt wird nun der beschädigte Reifen bis zu einem bestimmten Mindestdruck mit Luft befüllt. In herkömmlichen Systemen erfolgt dieses Wiederbefüllen des Reifens gegen das Ausströmen der Luft durch die im Reifen vorhandene Leckage. Erst nach Aufpumpen des Pannenreifens bis zu einem stabilen Mindestdruck und anschließender Weiterfahrt des aufgepumpten Reifens, kann ein Abdichten der Leckage erfolgten. Daher war eine Abdichtung der Reifenleckage ohne eine Reifenbewegung zur Verteilung des Dichtmittels im Reifen bisher nur sehr selten möglich.

Wie bereits vorstehend erläutert kann die Weiterfahrt und damit die Reifenbewegung erst erfolgen, wenn ein bestimmter Mindestdruck im Reifen hergestellt ist. Je nachdem wie groß die Leckage des Reifens ist, kann es daher vorkommen, dass bei bisherigen Pannen eine Abdichtung des Reifens nicht möglich war, da der geforderte Mindestdruck nicht erreicht wurde. Es ist daher wünschenswert, einen Reifen mit Leckage abdichten zu können, in dem nicht zuerst ein bestimmter Mindestdruck erreicht werden muss.

Im Stand der Technik ist bereits bekannt:

DE 102016209302 A1 offenbart ein "Verfahren zum Abdichten und Aufpumpen aufblasbarer Gegenstände, insbesondere zum Abdichten und Aufpumpen von Kraftfahrzeugreifen, wobei mit Hilfe eines durch vorzugsweise einen Elektromotor angetriebenen Kompressors ein Abdicht- bzw. Pumpdruck erzeugt wird, wobei mit dem Abdicht- bzw. Pumpdruck über eine Ventil- und Verteilereinrichtung für Dichtmittel und Druckgas und über Druckluft- bzw. Dichtmittelschläuche zwischen Ventil- und Verteilereinrichtung und einem Eingangsventil bzw. einer Einlassdüse des aufblasbarem Gegenstands ein in einem an die Ventil- und Verteilereinrichtung angeschlossenen Dichtmittelbehälter befindliches Dichtmittel in den aufblasbaren Gegenstand gefördert wird und gleichzeitig der aufblasbare Gegenstand abgedichtet und auf einen vorgegebenen Betriebsdruck aufgepumpt wird" (s. Anspruch 1).

In der EP 1 419 876 A2 wird eine Verteilervorrichtung gemäß dem Oberbegriff des Anspruchs 1 sowie eine Verwendung dieser Vorrichtung und ein Verfahren zum Abdichten von Fahrzeugreifen oder aufblasbaren technischen Gummiartikeln offenbart.

Eine Aufgabe, die der Erfindung zugrunde liegt, besteht darin, eine Vorrichtung bereitzustellen, welche einen Fahrzeugluftreifen oder aufblasbaren technischen Gummiartikel zumindest teilweise abdichten kann, ohne den Fahrzeugluftreifen oder den aufblasbaren technischen Gummiartikel bewegen zu müssen und/oder einen Mindestdruck in einem Fahrzeugluftreifen oder in einem aufblasbaren technischen Gummiartikel vorliegt.

Gelöst wird diese Aufgabe erfindungsgemäß durch eine Verteilervorrichtung gemäß Anspruch 1.

Im Rahmen eigener Untersuchungen wurde überraschenderweise festgestellt, dass die Leckage eines Reifens zumindest teilweise dadurch abgedichtet werden kann, dass ein Aerosol umfassend sowohl ein Gas, wie beispielsweise Luft, als auch Dichtmittel in den Reifen mit Leckage eingeführt oder hineingedrückt wird. Aufgrund der Leckage im Reifen entsteht hierdurch eine Strömung des Aerosols von der Einführöffnung, an der das Aerosol in den Reifen eingebracht wird, hin zur Leckage des Reifens, an der hauptsächlich oder ausschließlich das Gas des Aerosols austritt. Diese Einführöffnung liegt üblicherweise an dem innenliegenden Ende des Reifenventils.

Die Dichtmittelpartikel des Aerosols aus einer erfindungsgemäßen Verteilervorrichtung bleiben hierbei an den Wänden der Leckage hängen und dichten somit die Leckage zumindest teilweise ab. Bei einer ausreichend lang andauernden Strömung des Aerosols mittels der erfindungsgemäßen Verteilervorrichtung hin zur Leckage des Reifens, insbesondere bei einer ausreichend guten Aerosolausbeute des Dichtmittels, kann die Leckage des Reifens häufig

- gänzlich abgedichtet werden oder
- zumindest in einem solchen Maße abgedichtet werden, dass der geforderte Mindestdruck zur Weiterfahrt mit dem teilweise abgedichteten Reifen erreicht wird.

Dies geschieht vorteilhafterweise bevorzugt ohne den Reifen selbst zu bewegen. Die Weiterfahrt führt anschließend dazu, dass das im Reifen verbleibende Dichtmittel beim Anfahren verteilt und die verbleibende Leckage im Reifen anschließend gänzlich oder noch weiter abgedichtet werden kann. Bevorzugt ist der Fahrzeugluftreifen im Rahmen der vorliegenden Erfindung ein Kraftfahrzeugluftreifen.

Überraschenderweise wurde im Rahmen der vor- oder nachstehend beschriebenen eigenen Untersuchungen festgestellt, dass sich ein vorstehendes Aerosol nur oder insbesondere dann herstellen lässt, wenn die der zur Verteilervorrichtung zugeführte Dichtmittelmenge pro Zeiteinheit mittels eines genauen Dosierens begrenzt wird.

Die Dosiereinheit einer erfindungsgemäßen Verteilervorrichtung ist daher besonders bevorzugt eine Dosiereinheit zum Begrenzen der dem Dichtmitteltransportkanal zugeführten Dichtmittelmenge.

Wird zu viel Dichtmittel auf einmal der Verteilervorrichtung zugeführt, so verringert sich die Aerosolausbeute erheblich oder es wird schlimmstenfalls kein Aerosol mehr gebildet. Dies kann dazu führen, dass das Dichtmittel in Form von großen, nicht schwebenden Dichtmitteltropfen in den Pannenreifen gelangt. Dies ist aus den folgenden drei Gründen weniger vorteilhaft:

1. da auf diese Weise keine Leckagen abgedichtet werden können, welche sich nicht am tiefsten Punkt des Pannenreifens, dem Sammelpunkt der nicht schwebenden Topfen, befinden,
2. da der Kompressor für eine längere Zeit zum Erreichen des Mindestdrucks betrieben werden muss und
3. da nicht schwebenden Dichtmitteltropfen nicht zum Abdichten von Leckagen in den Seitenwänden geeignet sind.

Ein Dosieren der zur Verteilervorrichtung zugeführten Dichtmittelmenge ist daher erforderlich, um genügend Aerosol zum Abdichten des Fahrzeugluftreifens oder des aufblasbaren technischen Gummiartikels zu gewährleisten.

Im Rahmen der vorliegenden Erfindung beschreibt der Ausdruck "Dispersion" eine Mischung aus mindestens zwei Stoffen in unterschiedlichen Phasen, z. B. ein Fest-Flüssig- oder ein Fest-Gasförmig- oder ein Flüssig-Gasförmig-Gemisch. Im Rahmen der vorliegenden Erfindung beschreibt der Ausdruck "Aerosol" eine spezielle Dispersion, bei der ein Gas die kontinuierliche Phase und die Flüssigkeit in Form von Aerosolpartikeln die dispergierte Phase bildet. Bevorzugt ist ein Aerosol im Rahmen der vorliegenden Erfindung eine spezielle Dispersion, bei der ein Gas die kontinuierliche Phase und die Flüssigkeit in Form von Aerosolpartikeln die dispergierte Phase bildet und zumindest ein Aerosolpartikel einen Durchmesser von höchstens 100 $\mu$m aufweist, besonders bevorzugt zumindest ein Teil der Aerosolpartikel einen Durchmesser von höchstens 100 $\mu$m aufweist, ganz besonders bevorzugt zumindest der Hauptteil der Anzahl der Aerosolpartikel einen Durchmesser von höchstens 100 $\mu$m oder 500 $\mu$m aufweisen, sämtliche der Aerosolpartikel einen Durchmesser von höchstens 100 $\mu$m oder 500 $\mu$m aufweisen. Besonders bevorzugt ist ein Aerosol im Rahmen der vorliegenden Erfindung eine spezielle Dispersion, bei der ein Gas die kontinuierliche Phase und die Flüssigkeit in Form von Aerosolpartikeln eine schwebende dispergierte Phase bildet und zumindest ein Aerosolpartikel einen Durchmesser von höchstens 100 $\mu$m aufweist, besonders bevorzugt zumindest ein Teil der Aerosolpartikel einen Durchmesser von höchstens 100 $\mu$m aufweist, ganz besonders bevorzugt zumindest der Hauptteil der Anzahl der Aerosolpartikel einen Durchmesser von höchstens 100 $\mu$m aufweist, sämtliche der Aerosolpartikel einen Durchmesser von höchstens 100 $\mu$m aufweisen.

Im Rahmen der vorliegenden Erfindung ist die Aerosolausbeute des Dichtmittels das Verhältnis zwischen der Gesamtmasse an Dichtmittelpartikeln des erzeugten Aerosols zu verwendeter Gesamtmasse an Dichtmittel. Eine Aerosolausbeute von 100 % bedeutet demnach, dass die gesamte Masse an Dichtmittel in ein Aerosol überführt wurde.

Wie vorstehend bereits erwähnt wurde im Rahmen der vorliegenden Erfindung festgestellt, dass ein vorstehend beschriebenes Aerosol dadurch erzeugt werden kann, dass die zu einer erfindungsgemäßen Verteilervorrichtung zugeführten Menge an Dichtmittel auf besondere Weise dosiert wird, d.h. nicht nur die zugeführte Menge an Dichtmittel kontrolliert wird, sondern auch die Dichtmittelmenge so in den Gasstrom hinzudosiert wird, dass Aerosolpartikel aus Dichtmitteltropfen in dem von dem Gasanschluss kommenden Gasstrom entstehen. Sowohl die Dichtmittelmenge als auch die Art des Hinzudosierens werden im Rahmen der vorliegenden Erfindung mittels der Dosiereinheit der erfindungsgemäßen Verteilervorrichtung erreicht.

Im Rahmen der vorliegenden Erfindung ist das Gas des Aerosols bevorzugt ein Trägergas, welches die kontinuierliche Phase des Aerosols darstellt und die Aerosolpartikel transportiert. Das Trägergas des Aerosols ist beispielsweise Druckluft aus einem Kompressor oder einer anderen Druckluftquelle. Die Ausdrücke "Gas" und "Trägergas" werden im Rahmen dieser Erfindung synonym verwendet.

Bevorzugt ist eine erfindungsgemäße Verteilervorrichtung wie vorstehend beschrieben oder wie vorstehend als bevorzugt beschrieben, wobei die Verteilervorrichtung mindestens einen Dichtmitteltransportkanal zum Transport eines Aerosols von der Dosiereinheit zu dem einen oder mehr als einem Verbindungselement aufweist, bevorzugt verbindet der Dichtmitteltransportkanal räumlich den Gasanschluss mit dem Dichtmittelanschluss und dem einen oder dem mehr als einen Verbindungselement. Der Dichtmitteltransportkanal kann daher bevorzugt einen oder mehrere Verzweigungen und Kanalabschnitte umfassen.

Im Rahmen der vorliegenden Erfindung bedeutet der Ausdruck "räumlich verbunden/räumlich verbinden", dass die verschiedenen Anschlüsse oder Kanalabschnitte so ausgerichtet sind, dass ein Luftdruckstrom und/oder eine Dispersion, bevorzugt ein Aerosol aus Luft und Dichtmittel, von dem einen Kanalabschnitt oder Anschluss zu dem anderen gelangen kann.

Besonders bevorzugt ist eine erfindungsgemäße Verteilervorrichtung wie vorstehend beschrieben oder wie vorstehend als bevorzugt beschrieben, wobei die Dosiereinheit so ausgebildet ist, dass das der Verteilervorrichtung zugeführte Dichtmittel Aerosolpartikel in einem von dem Gasanschluss kommenden Gasstrom bilden kann, bevorzugt so, dass der Gasstrom im Dichtmitteltransportkanal gebildet werden kann.

Der Vorteil des vorstehend beschriebenen Aspekts der vorliegenden Erfindung ist, dass beim Einhalten der vorstehenden Bedingungen üblicherweise verwendeten Luftströmen aus dem Kompressor, üblicherweise verwendeten Dichtmitteltransportkanäle und üblicherweise verwendeten Dichtmittelbehältern besonders gut Aerosolpartikel aus Dichtmittel im Dichtmitteltransportkanal einer erfindungsgemäßen Verteilervorrichtung erzeugt werden können.

Bevorzugt ist eine erfindungsgemäße Verteilervorrichtung wie vorstehend beschrieben oder wie vorstehend als bevorzugt beschrieben, wobei die Dosiereinheit in oder an dem Dichtmittelanschluss oder zwischen dem Dichtmittelanschluss und dem Dichtmittelkanal angeordnet ist und/oder die Verteilervorrichtung einen Dichtmitteltransportkanal zum Transport eines Aerosols von der Dosiereinheit zum einen oder mehr als einem Verbindungselement aufweist. Besonders bevorzugt ist die Dosiereinheit maximal 10 cm in Zuführrichtung nach dem Dichtmittelanschluss angeordnet ist, ganz besonders bevorzugt maximal 5 cm in Zuführrichtung nach dem Dichtmittelanschluss, insbesondere ganz besonders bevorzugt maximal 2 cm in Zuführrichtung nach dem Dichtmittelanschluss.

Im Rahmen der vorliegenden Erfindung hat der Dichtmitteltransportkanal einer erfindungsgemäßen Verteilervorrichtung

- eine Länge im Bereich von 10 mm bis 10 000 mm, bevorzugt im Bereich von 10 mm bis 1000 mm, besonders bevorzugt im Bereich von 10 mm bis 600 mm, und/oder
- einen Innendurchmesser im Bereich von 0,1 mm bis 100 mm bevorzugt im Bereich von 1 mm bis 20 mm, besonders bevorzugt im Bereich von 1 mm bis 8 mm.

Ein Vorteil der beiden vorstehend beschriebenen Aspekte ist, dass eine besonders kompakte und platzsparende Anordnung von Dichtmittelanschluss, Dosiereinheit, Gasanschluss und Dichtmitteltransportkanal erreicht werden kann, ohne dass die Aerosolausbeute beeinträchtigt wird. Eine kompakte und Platz sparende Ausgestaltung der erfindungsgemäßen Verteilervorrichtung hat insbesondere Vorteil, dass die gebildeten Aerosolpartikel nicht agglomerieren oder anderweitig vergrößert werden können, bevor sie in den Reifen mit Leckage eindringen.

Bevorzugt ist eine erfindungsgemäße Verteilervorrichtung wie vorstehend beschrieben oder wie vorstehend als bevorzugt beschrieben, wobei die Dosiereinheit mindestens eine Zuführöffnung zum Zuführen eines Dichtmittels in die Verteilervorrichtung, bevorzugt in den Dichtmitteltransportkanal, aufweist, wobei bevorzugt die eine oder die mindestens eine Zuführöffnung einen Durchmesser im Bereich von 0,01 mm bis 10 mm, bevorzugt einen Durchmesser im Bereich von 0,1 mm bis 5 mm, besonders bevorzugt einen Durchmesser im Bereich von 0,1 mm bis 1,5 mm, ganz besonders bevorzugt einen Durchmesser im Bereich von 0,1 mm bis 1mm.

Ein Vorteil des vorstehend beschriebenen Aspekts ist, dass mit solchen Zuführöffnungen besonders gut Aerosolpartikel aus Dichtmittel im Dichtmitteltransportkanal erzeugt werden können.

Bevorzugt ist eine erfindungsgemäße Verteilervorrichtung wie vorstehend beschrieben oder wie vorstehend als bevorzugt beschrieben, wobei die Dosiereinheit mindestens eine Zuführöffnung zum Zuführen eines Dichtmittels in die Verteilervorrichtung aufweist und

- die eine Zuführöffnung einen Durchmesser im Bereich von 0,1 mm bis 5 mm, oder
- bevorzugt die mindestens eine Zuführöffuung einen Durchmesser im Bereich von 0,1 mm bis 1,5 mm und eine Anzahl an Zuführöffnungen im Bereich von 1 bis 5 oder 1 bis 2 vorliegt, oder
- besonders bevorzugt die mindestens eine Zuführöffnung einen Durchmesser im Bereich von 0,1 mm bis 1 mm und eine Anzahl an Zuführöffnungen von mindestens 2 oder im Bereich von 2 bis 10, bevorzugt im Bereich von 3 bis 5, vorliegt.

Im Rahmen der vorliegenden Erfindung können die Zuführöffnungen auch eine nichtrunde Form aufweisen und dementsprechend anstelle eines Durchmessers eine spezifische Diagonale aufweisen. Hat eine Zuführöffnung beispielsweise eine polygone Form so tritt anstelle des Durchmessers die Diagonale des Vierecks, des Fünfecks, des Sechsecks, usw. oder die Höhe für den Fall, dass die Form der Zuführöffnung der Dosiereinheit ein Dreieck ist. Hat die Zuführöffnungen eine asymmetrische Form so tritt anstelle des Durchmessers oder der Diagonalen der Abstand zwischen den am weitesten entfernten Punkten auf dem die Zuführöffnung begrenzenden Öffnungsrand.

Ein Beispiel, bei dem die Zuführöffnungen der Dosiereinheit asymmetrische Formen bilden, wie beispielsweise dann vor, wenn die Dosiereinheit einer erfindungsmäßen Verteilervorrichtung ein zelloffener geschäumter Kunststoff ist und das Dichtmittel durch verschiedene Kanäle des zelloffener geschäumter Kunststoff in die erfindungsgemäße Verteilervorrichtung hineindosiert wird. Ein Vorteil ist hier, dass je nach Beschaffenheit der Zellstruktur eine während der Verwendung einheitlichere Dosiergeschwindigkeit beim Dosieren aus einem Dichtmittelbehälter erreicht werden kann, da hierdurch die Wirkung der Schwerkraft gemindert werden kann.

Bevorzugt ist eine erfindungsgemäße Verteilervorrichtung wie vorstehend beschrieben oder wie vorstehend als bevorzugt beschrieben, wobei die Dosiereinheit so ausgebildet ist, dass

- ein Aerosol umfassend Dichtmitteltropfen und ein Gas entsteht, bevorzugt sodass ein Aerosol umfassend Dichtmitteltropfen und ein Gas im Dichtmitteltransportkanal der erfindungsgemäßen Verteilervorrichtung entsteht,
- die Anzahl der Zuführöffnungen und/oder der Durchmesser der einen oder der mindestens einen Zuführöffnung eingestellt werden kann
und/oder
- die Dosiergeschwindigkeit der zur Verteilervorrichtung zugeführten Dichtmittelmenge eingestellt werden kann.

Ein Vorteil des vorstehend beschriebenen Aspekts ist, dass aufgrund der Einstellungen

- der Anzahl der Zuführöffnungen,
- der Durchmesser der Zuführöffnungen
und/oder
- der Dosiergeschwindigkeit

die Bedingungen stets so gewählt werden können, dass sich ein Aerosol umfassend Dichtmitteltropfen und ein Gas bildet. Da der Volumenstrom des Dichtmittels meist durch die verbleibende Restmenge des Dichtmittels im Dichtmittelbehälter festgelegt ist und der Innendurchmesser D des Dichtmitteltransportkanals nur schwer während des Betriebs der erfindungsgemäßen Vorrichtung verändert werden kann, ist die Größe oder die Anzahl der Zuführöffnungen ein vergleichsweise einfach zu kontrollierender Parameter, welcher bei einer abnehmenden Menge an Dichtmittel im Dichtmittelbehälter so angepasst werden kann, dass bevorzugt ein Aerosol entsteht und besonders bevorzugt die nachstehende Formel (1) während des Betriebs der erfindungsgemäßen Vorrichtung erfüllt werden kann. Dies stellt ein langersehntes Bedürfnis auf dem vorliegenden Fachgebiet dar.

Die Anzahl und/oder der Durchmesser der Zuführöffnungen wird bevorzugt nicht nur an die Dosiergeschwindigkeit angepasst, welche von verschiedenen Parametern wie dem Füllstand des Dichtmittelbehälters oder den Flüssigkeitseigenschaften des Dichtmittels wie deren Viskosität abhängt. Auch vorteilhaft ist es, wenn die Anzahl und/oder der Durchmesser der Zuführöffnungen an den Volumenstrom des aus der Druckluftquelle angepasst wird, um die Aerosolausbeute zu vergrößern. Die Einstellung der Anzahl und/oder des Durchmessers der Zuführöffnungen kann genauer und plötzlicher erfolgen als die Einstellung der Druckluftquelle.

Aus den vorstehend beschriebenen Gründen ist daher eine erfindungsgemäße Verteilervorrichtung besonders bevorzugt, wobei die Dosiereinheit

- so in der Verteilervorrichtung angebracht ist, dass die Dosiereinheit während des Betriebs der Verteilervorrichtung oberhalb des Dichtmitteltransportkanals ist und/oder
- zusätzlich eine verschiebbare Scheibe zum Öffnen und Verschließen eines oder der mindestens einen Zuführöffnung aufweist.

Bevorzugt ist eine erfindungsgemäße Verteilervorrichtung wie vorstehend beschrieben oder wie vorstehend als bevorzugt beschrieben, wobei das eine oder das mehr als eine Verbindungselement eins, zwei oder sämtliche der folgenden Elemente umfasst:

- Abdichtungselement zum luftdichten Verbinden zwischen dem Verbindungselement und einem Reifenventil, wobei das Abdichtungselemente bevorzugt ein Hilfselement zum manuellen Befestigen des Verbindungselement an das Reifenventil aufweist,

- Ventilöffnungselement zum Öffnen eines Reifenventils und
- ein Ablasselement zum Angleichen des Radinnendrucks an den Außendruck.

Im Rahmen der vorliegenden Erfindung ist der Radinnendruck der Druck, welcher in dem Radinnenraum zwischen dem Fahrzeugluftreifen und der Fahrzeugfelge vorliegt, und der Außendruck, welcher außerhalb des Fahrzeugluftrads, insbesondere außerhalb des Radinnenraums, vorliegt.

Im folgenden Absatz wird zuerst auf Formel (2) eingegangen, bevor dann weiterhinten die Formel (1) beschrieben wird.

Die Dosiereinheit ist so ausgebildet, die folgende Bedingung bzw. Formel (2) zu erfüllen

$$D_{mm} \cdot \sqrt[3]{a} \leq 10\,mm \qquad \text{Formel (2),}$$

in der die folgende Parameter enthalten sind:

$D_{mm}$: Durchmesser der Zuführöffnungen [mm] und
a: Anzahl der Zuführöffnungen.

Bevorzugt ist es daher, wenn die Formel (2) nicht nur einen Wert von $\leq 10$ mm sondern von $\leq 1$ mm, besonders bevorzugt von $\leq 0,5$ mm, ganz besonders bevorzugt von $\leq 0,1$ mm ergibt. In eigenen Experimenten wurde herausgefunden, dass je kleiner die linke Seite der Formel (2), desto kleiner kann der durchschnittliche Durchmesser der Dichtmitteltropfen im Aerosol eingestellt werden.

Es ist eine besonders große Leistung der vorliegenden Erfindung herausgefunden zu haben, dass diese zwei wichtigen Parameter beim Erzeugen des Aerosols die Anzahl und der Durchmesser der Zuführöffnung der Dosiereinheit wie in Formel (2) oder wie vorstehend als bevorzugt beschrieben präzise eingestellt werden müssen

Bevorzugt ist eine erfindungsgemäße Verteilervorrichtung wie vorstehend beschrieben oder wie vorstehend als bevorzugt beschrieben, wobei die Dosiereinheit dazu geeignet ist, die folgende Bedingung bzw. Formel (3) zu erfüllen

$$\frac{\rho_G \cdot \eta_{DM} \cdot v_G \cdot V_{DM}}{D \cdot \gamma_{DM} \cdot \sqrt[3]{a} \cdot \eta_G} \geq 10^{-9} \quad \text{Formel (3),}$$

in der die folgende Parameter enthalten sind:

$\rho_G$: Dichte von Luft bei 20°C [kg/m³];

$v_{DM}$: dynamische Viskosität von Wasser bei 20°C [kg/(m·s)], gemessen bei 20 °C mittels ASTM D7042 und Stabinger-Viskometer;

$V_{DM}$: Volumenstrom zwischen 1 000 000 und 100 000 000 m³/s, gemessen nach ISO 1217, Anhang C;

$v_G$: Fließgeschwindigkeit von 0,000001 bis 1 [m/s], gemessen nach ASTM D3154 - 14;

$D$: Durchmesser der Zuführöffnungen von 0,01 mm bis 5 mm [m];

$\gamma_{DM}$: Oberflächenspannung von Wasser bei 20°C [kg/s²], gemessen nach ASTM D1331 - 14 (Methode A),

a: Anzahl der Zuführöffnungen von 1 bis 100;

$\eta_{DM}$: dynamische Viskosität des Dichtmittels bei 20°C [kg/(m·s)], gemessen nach Brookfield DV-II+, spindle 1, 20° C; und

$\eta_G$: dynamische Viskosität von Luft bei 20°C [kg/(m·s)], gemessen bei 20 °C mittels Rankine-Viskosimeters bei Normaldruck gemäß G. Meerlender, Rheologica Acta, (1965), 4, (1): Seiten 21-36.

Besonders bevorzugt umfasst die vorstehend beschriebene erfindungsgemäße Verteilervorrichtung hierbei auch einen Dichtmitteltransportkanal, wobei der Innendurchmesser des Dichtmitteltransportkanals bevorzugt an der ersten Zuführöffnung in Richtung des Volumenstroms gemessen wird. Besonders bevorzugt ist hierbei eine vorstehend als bevorzugt oder als besonders bevorzugt beschriebene Verteilervorrichtung, wobei die Dosiereinheit dazu geeignet ist, ein Aerosol umfassend sowohl Gas als auch Dichtmittelpartikeln oder ein Aerosol bestehend aus Gas und Dichtmittelpartikeln im Dichtmitteltransportkanal erzeugen.

Es ist eine große Leistung der vorliegenden Erfindung aufgrund eigener Untersuchungen und Überlegungen die vorstehende Formeln (2) und (3) ermittelt zu haben und somit quantitativer Aussagen zur Erzeugung eines Aerosols in der erfindungsgemäßen Verteilervorrichtung herleiten zu können.

Ein Vorteil des vorstehend beschriebenen Aspekts ist, dass die Aerosolausbeute besser eingestellt werden kann. Je kleiner das Ergebnis der Formel (2) oder je höher das Ergebnis der Formel (3), desto besser ist die Aerosolausbeute. In der Regel bedeutet dies, dass das Aerosol kleinere Dichtmitteltropfen, d.h. Dichtmittelpartikel, aufweist. In der Regel sind die Dichtmitteltropfen des Aerosols rund und haben somit einen Partikeldurchmesser.

Die Ausdrücke "Aerosolpartikel" und "Aerosoltropfen" werden im Rahmen der vorliegenden Erfindung synonym verwendet, sobald die Aerosolpartikel aus Dichtmittel bestehen, liegt ein "Dichtmittelpartikel", "Dichtmittel-Aerosolpartikel" oder ein "Dichtmitteltropfen" vor.

Bevorzugt ist es im Rahmen der vorliegenden Erfindung, wenn in den vorstehend oder nachstehend beschriebenen Formeln (1), (2) oder (3) gilt, dass $v_G \geq 10\ V_{DM}/(\pi D^2)$ ist, besonders bevorzugt wenn $v_G \geq 50\ V_{DM}/(\pi D^2)$ ist, ganz besonders bevorzugt wenn $v_G \geq 100\ V_{DM}/(\pi D^2)$ ist, insbesondere ganz besonders bevorzugt wenn $v_G = 500\ V_{DM}/(\pi D^2)$ ist, in besonders hohem Maße bevorzugt wenn $v_G \geq 1000\ V_{DM}/(\pi D^2)$ ist.

Bevorzugt ist es daher, wenn die Formel (3) nicht nur einen Wert von über $10^{-9}$ aufweist sondern von über $10^{-8}$, besonders bevorzugt von über $10^{-7}$, ganz besonders bevorzugt von über $10^{-6}$ ergibt. Je größer das Ergebnis der linken Seite der Formel (3), desto höher ist die Aerosolausbeute. Dies bedeutet in der Regel, dass der durchschnittliche Durchmesser der Dichtmitteltropfen im Aerosol kleiner ist.

Es ist eine besonders große Leistung der vorliegenden Erfindung herausgefunden zu haben, dass beim Erzeugen des Aerosols die Viskositäten des Dichtmittels und des Transportgases bzw. der Druckluft in der in Formel (3) angegebenen Weise die Aerosolausbeute beeinflussen.

In besonders hohem Maße bevorzugt ist eine Verteilervorrichtung wie vorstehend beschrieben, wobei die Verteilervorrichtung

- mindestens einen Gasanschluss zur Verbindung mit mindestens einer Druckluftquelle,
- mindestens einen Dichtmittelanschluss zur Verbindung mit mindestens einem Dichtmittelbehälter aufweist und
- ein oder mehr als ein Verbindungselemente zur Verbindung mit einem Fahrzeugluftreifen

aufweist,

wobei

- die Verteilervorrichtung eine Dosiereinheit zum Dosieren der zur Verteilervorrichtung zugeführten Dichtmittelmenge aufweist,
- die Dosiereinheit in oder an dem Dichtmittelanschluss angeordnet ist,
- die Dosiereinheit zwei, drei oder vier Zuführöffnungen zum Zuführen eines Dichtmittels in die Verteilervorrichtung aufweist und die zwei, drei oder vier Zuführöffnungen einen Durchmesser im Bereich von 0,1 mm bis 1,5 mm oder von 0,1 mm bis 0,7 mm aufweisen,
- die Dosiereinheit so ausgebildet ist, dass die Anzahl der Zuführöffnungen oder der Innendurchmesser der einen oder der mindestens einen Zuführöffnung verändert werden kann.

Die vorstehend beschriebenen vorteilhaften Aspekte einer erfindungsgemäßen Verteilervorrichtung zur Erzeugung eines Aerosols gelten auch für sämtliche Aspekte einer nachstehend beschriebenen Systems und die nachstehend diskutierten vorteilhaften Aspekte erfindungsgemäßer Systeme gelten entsprechend für sämtliche Aspekte einer erfindungsgemäßen Verteilervorrichtung zur Erzeugung eines Aerosols.

Die Erfindung betrifft auch ein System zum Abdichten und Aufpumpen von Fahrzeugluftreifen, umfassend

- eine Verteilervorrichtung wie vorstehend beschrieben oder wie vorstehend als bevorzugt beschrieben,
- mindestens eine Druckluftquelle zur Erzeugung eines Abdichtdrucks oder eines Pumpdrucks und
- mindestens einen Dichtmittelbehälter zur Aufnahme eines Dichtmittels und/oder eines Gases.

Das erfindungsgemäße System kann dabei so eingerichtet sein, dass Dichtmittel aus dem Dichtmittelbehälter aufgrund der Schwerkraft und/oder aufgrund der Druckluft aus dem Kompressor durch die Dosiereinheit in die erfindungsgemäße Verteilervorrichtung gelangt. Im letzteren Falle umfasst ein erfindungsgemäßes System bevorzugt ein Ventil zum Steuern des Druckluftstromes, wobei das Ventil so eingerichtet ist, dass es in einem Bypass-Modus die Druckluft direkt in den abzudichtenden Reifen führt und in einem Dichtmittelmodus die Druckluft zumindest teilweise zuerst in den Innenraums des Dichtmittelbehälters leitet, bevorzugt so leitet, dass die Druckluft zusammen mit dem Dichtmittel durch die Dosiereinheit befördert wird.

Bevorzugt umfasst ein erfindungsgemäßes System zusätzlich Schläuche und Leitungen zum Verbinden der einzelnen Systemkomponenten sowie Schalt-, Steuer- und Anzeigeeinrichtungen zur erleichterten Bedienung des Systems.

Bevorzugt ist ein erfindungsgemäßes System wie vorstehend beschrieben oder wie vorstehend als bevorzugt beschrieben, wobei das System zusätzlich eine Temperiereinheit zum Kühlen des Dichtmittelbehälters umfasst.

In besonders hohem Maße bevorzugt ist ein erfindungsgemäßes System wie vorstehend beschrieben oder wie vorstehend als bevorzugt beschrieben, wobei das System

- eine Verteilervorrichtung wie vorstehend beschrieben oder wie vorstehend als bevorzugt beschrieben,
- mindestens eine Druckluftquelle zur Erzeugung eines Abdichtdrucks oder eines Pumpdrucks und
- mindestens einen Dichtmittelbehälter zur Aufnahme eines Dichtmittels und/oder eines Gases

aufweist,

wobei

- die Verteilervorrichtung eine Dichtmitteltransportkanal aufweist,
- die Dosiereinheit in oder an dem Dichtmittelanschluss angeordnet ist,
- die Dosiereinheit so ausgebildet ist, die folgende Bedingung bzw. Formel (2) zu erfüllen

$$D_{mm} \cdot \sqrt[3]{a} \leq 10\,mm \qquad \text{Formel (2)},$$

in der die folgende Parameter enthalten sind:

$D_{mm}$: Durchmesser der Zuführöffnungen [mm]
und
a: Anzahl der Zuführöffnungen.

Die vorstehend beschriebenen vorteilhaften Aspekte einer erfindungsgemäßen Verteilervorrichtung und erfindungsgemäßer Systeme gelten auch für sämtliche Aspekte einer nachstehend beschriebenen Verwendung einer Dosiereinheit und die nachstehend diskutierten vorteilhaften Aspekte erfindungsgemäßer Verwendungen einer Dosiereinheit gelten entsprechend für sämtliche Aspekte einer erfindungsgemäßen Verteilervorrichtung und erfindungsgemäßer Systeme.

Die Erfindung betrifft auch die Verwendung

- einer Dosiereinheit wie vorstehend beschreiben oder wie vorstehend als bevorzugt beschreiben oder

- einer Verteilervorrichtung wie vorstehend beschreiben oder wie vorstehend als bevorzugt beschreiben

- zum Erzeugen eines Aerosols umfassend Dichtmitteltropfen und Gas, wobei das erzeugte Aerosol bevorzugt in einen Fahrzeugluftreifen oder in einen aufblasbaren technischen Gummiartikel geleitet wird, und/oder
- zum Erzeugen eines Aerosols zum Abdichten von Fahrzeugluftreifen oder aufblasbaren technischen Gummiartikel, wobei das erzeugte Aerosol bevorzugt in einen Fahrzeugluftreifen oder in einen aufblasbaren technischen Gummiartikel geleitet wird.

Die vorstehend beschriebenen vorteilhaften Aspekte einer erfindungsgemäßen Verteilervorrichtung, erfindungsgemäßer Systeme und erfindungsgemäßer Verwendungen gelten auch für sämtliche Aspekte eines nachstehend beschriebenen Verfahren und die nachstehend diskutierten vorteilhaften Aspekte erfindungsgemäßer Verfahren gelten entsprechend für sämtliche Aspekte einer erfindungsgemäßen Verteilervorrichtung, erfindungsgemäßer Systeme und erfindungsgemäßer Verwendungen.

Die Erfindung betrifft auch ein Verfahren zum Abdichten von Fahrzeugluftreifen oder aufblasbaren technischen Gummiartikeln, umfassen die folgenden Schritte:

A) Bereitstellen oder Herstellen

- eines Systems wie vorstehend beschreiben oder wie vorstehend als bevorzugt beschreiben,
- eines Dichtmittels in dem Dichtmittelbehälter und
- eines Fahrzeugluftreifens mit Leckage oder eines aufblasbaren technischen Gummiartikels mit Leckage,

B) Leiten des Dichtmittels und einem Gas wie beispielsweise Druckluft durch die Verteilervorrichtung des Systems in den Fahrzeugluftreifen mit Leckage oder in den aufblasbaren technischen Gummiartikel mit Leckage,
C) zumindest teilweises Abdichten des Fahrzeugluftreifens mit Leckage oder des aufblasbaren technischen Gummiartikels mit Leckage.

Ein erfindungsgemäßes Verfahren hat die vorstehend beschriebenen Vorteile, wobei insbesondere zu erwähnen ist, dass in einem erfindungsgemäßen Verfahren ein Reifen mit Leckage nicht ins Rollen gebracht werden muss, um die Leckage teilweise oder gänzlich abzudichten. Dies resultiert aus dem Erzeugen eines Aerosols im Innenraum des Reifens mit Leckage, welches zum zumindest teilweisen Abdichten des Fahrzeugluftreifens gemäß Schritt C) führt.

Bevorzugt besteht das Dichtmittel aus oder umfasst das Dichtmittel eines erfindungsgemäßen Verfahrens Wasser und mindestens einen Dichtstoff auf Kautschuk- oder Harzbasis, wobei Polyisopren als Kautschuk oder Kolophonium-Harz als Harz bevorzugt sind, wobei der Wasseranteil des Dichtmittels bevorzugt mindestens 80 Gew.-% des gesamten Gewichts des Dichtmittels ausmacht, besonders bevorzugt mindestens 90 Gew.-%, ganz besonders bevorzugt mindestens 99 Gew.-%.

Bevorzugt ist ein Verfahren wie vorstehend beschreiben oder wie vorstehend als bevorzugt beschreiben, wobei der Fahrzeugluftreifen oder der aufblasbare technische Gummiartikel während des Schrittes C) und/oder zeitlich zwischen den Schritten B) und C) nicht bewegt wird, insbesondere nicht rotiert wird.

Bevorzugt ist ein Verfahren wie vorstehend beschreiben oder wie vorstehend als bevorzugt beschreiben, wobei in Schritt B) durch Zuführen des Dichtmittels mittels der Dosiereinheit in den Dichtmitteltransportkanal ein Aerosol bestehend aus Dichtmitteltropfen und dem Gas erzeugt wird.

Bevorzugt ist ein Verfahren wie vorstehend beschreiben oder wie vorstehend als bevorzugt beschreiben, wobei das Verfahren zusätzlich den folgenden Schritt umfasst, wobei der Schritt B-C) zeitlich vor dem Schritt C) durchgeführt wird:
B-C) Leiten des Aerosols von der Dosiereinheit der Verteilervorrichtung über den oder einen Dichtmitteltransportkanal in den Kraftfahrzeugreifen mit Leckage oder in den aufblasbaren technischen Gummiartikel mit Leckage, wobei das Aerosol bevorzugt wie vorstehend oder nachstehend beschrieben ist.

Ein Vorteil des vorstehend beschriebenen Aspekts ist, dass ein Dichtmitteltransportkanal zum Transport eines Aerosols ein unvorteilhaftes Konglomerieren der Aerosolpartikel oder deren nachteiliges Koaleszieren vermeidet und somit sicherstellt, dass ein möglichst großer Teil der Aerosolpartikel möglichst unverändert in den Reifen mit Leckage oder in den aufblasbaren technischen Gummiartikel mit Leckage gelangt. Ein Dichtmitteltransportkanal einer erfindungsgemäßen Verteilervorrichtung kann beispielsweise aus handelsüblichen Polypropylen bestehen und einen handelsüblichen Tire Connector umfassen, welcher den Dichtmitteltransportkanal mit einem Reifenventil, darstellt oder eine Anschlussmöglichkeit an einen aufblasbaren technischen Gummiartikel umfassen. Anstelle von Polypropylen kann jeder handelsübliche Kunststoff verwendet werden, auf deren Oberfläche Wasser einen Kontaktwinkel von über 90° gemessen nach ASTM D7334 - 08(2013). Der vorstehend beschriebene Dichtmitteltransportkanal zum Transport eines Aerosols ist insbesondere ein Dichtmitteltransportkanal einer erfindungsgemäßen Verteilervorrichtung wie vorstehend oder als wie vorstehend als bevorzugt beschrieben.

Bevorzugt ist ein Verfahren wie vorstehend beschreiben oder wie vorstehend als bevorzugt beschreiben, wobei in Schritt B) durch Zuführen des Dichtmittels mittels der Dosiereinheit in den Dichtmitteltransportkanal ein Aerosol bestehend aus Dichtmitteltropfen und dem Gas erzeugt wird und/oder mindestens 50 Gew.-% der Aerosolpartikel des in Schritt B) in den Fahrzeugluftreifen mit Leckage oder in den aufblasbaren technischen Gummiartikel mit Leckage geleiteten Aerosols einen Partikeldurchmesser im Bereich von 0,01 $\mu$m bis 500 $\mu$m aufweisen, bevorzugt im Bereich von 1 $\mu$m bis 100 $\mu$m.

Im Rahmen der vorliegenden Erfindung wird der Durchmesser der Aerosolpartikel oder der mittlere Partikeldurchmesser der Aerosolpartikel bevorzugt mit einem bekannten optischen Partikelzähler gemessen, besonders bevorzugt mit dem "GRIMM wide-range System" der Firma "Grimm Aerosol Technik GmbH" durchgeführt. Der mittlere Partikeldurchmesser ist ganz besonders bevorzugt das Zahlenmittel der verschiedenen Partikeldurchmesser der Aerosolpartikel.

Ein Vorteil des vorstehend beschriebenen Aspekts ist, dass Aerosolpartikel wie vorstehend beschrieben oder wie davor beschrieben

- einen Fahrzeugluftreifen bzw. einen aufblasbaren technischen Gummiartikel besonders gut abdichten wird, und/oder

- eine besonders hoher Anteil des Aerosols zur Leckage transportiert werden kann erzielen, was insbesondere bei Verwendung eines Tire Connectors vorteilhaft ist, da Aerosolpartikelgrößenverteilungen wie vorstehend beschrieben diesen besonders gut passieren.

Ganz besonders bevorzugt ist ein Verfahren wie vorstehend beschrieben oder wie vorstehend als bevorzugt beschrieben, wobei die Aerosolpartikel

- einen mittleren Partikeldurchmesser der Aerosolpartikel im Bereich von 50 bis 150 $\mu$m aufweisen, wobei der Partikeldurchmesser der Aerosolpartikel nicht größer als 9000 $\mu$m ist, bevorzugt nicht größer als 5000 $\mu$m, besonders bevorzugt nicht größer als 500 $\mu$m, ganz besonders bevorzugt nicht größer als 100 $\mu$m,
- besonders bevorzugt eine mittlere Partikeldurchmesser der Aerosolpartikel im Bereich von 50 bis 100 $\mu$m aufweisen, wobei der Partikeldurchmesser der Aerosolpartikel nicht größer als 5000 $\mu$m ist, bevorzugt nicht größer als 1000 $\mu$m, besonders bevorzugt nicht größer als 500 $\mu$m, ganz besonders bevorzugt nicht größer als 100 $\mu$m.

Ganz besonders bevorzugt ist auch ein Verfahren wie vorstehend beschrieben oder wie vorstehend als bevorzugt bzw. als besonders bevorzugt beschrieben, wobei die Aerosolpartikel einen mittleren Partikeldurchmesser der Aerosolpartikel im Bereich von 50 bis 150 $\mu$m aufweisen und

- mindestens 50 Massenprozent der Aerosolpartikel, bevorzugt mindestens 90 Massenprozent, einen Partikeldurchmesser der Aerosolpartikel im Bereich von 1 $\mu$m bis 100 $\mu$m aufweisen.

Bevorzugt ist ein Verfahren wie vorstehend beschreiben oder wie vorstehend als bevorzugt beschreiben, wobei die folgende Bedingung bzw. Formel (1) erfüllt ist

$$\frac{\rho_G \cdot v_G \cdot V_{DM}}{D \cdot \gamma_{DM} \cdot \sqrt[3]{a}} \geq 10^{-5} \qquad \text{Formel (1)},$$

in der die folgende Parameter enthalten sind:

$\rho_G$: Dichte des Transportgases bei 20°C [kg/m$^3$];

$v_G$: Fließgeschwindigkeit der zur Verteilervorrichtung zugeführten Gas- bzw. Druckluftmenge [m/s], gemessen nach ASTM D3154 - 14;

$V_{DM}$: Volumenstrom der zur Verteilervorrichtung zugeführten Dichtmittelmenge [m$^3$/s], gemessen nach ISO 1217, Anhang C;

$D$: Durchmesser der Zuführöffnungen [m];

$\gamma_{DM}$: Oberflächenspannung des Dichtmittels bei 20°C und Normaldruck [kg/s$^2$], gemessen nach ASTM D1331 - 14 (Methode A), und

a: Anzahl der Zuführöffnungen.

Bevorzugt ist es daher, wenn die Formel (1) nicht nur einen Wert von über 10$^{-4}$ aufweist sondern von über 10$^{-3}$, besonders bevorzugt von über 10$^{-2}$, ganz besonders bevorzugt von über 10$^{-1}$, insbesondere ganz besonders bevorzugt von über 1, in besonders hohem Maße bevorzugt von über 10. Je größer das Ergebnis der linken Seite der Formel (1), desto höher ist die Aerosolausbeute. Dies bedeutet in der Regel, dass der durchschnittliche Durchmesser der Dichtmitteltropfen im Aerosol kleiner ist.

Es ist eine besonders große Leistung der vorliegenden Erfindung herausgefunden zu haben, dass beim Erzeugen des Aerosols die Oberflächenspannung des Dichtmittels in der in Formel (1) angegebenen Weise die Aerosolausbeute beeinflusst.

Bevorzugt ist ein Verfahren wie vorstehend beschreiben oder wie vorstehend als bevorzugt beschrieben, wobei die folgende Bedingung bzw. Formel (3) erfüllt ist

$$\frac{\rho_G \cdot \eta_{DM} \cdot v_G \cdot V_{DM}}{D \cdot \gamma_{DM} \cdot \sqrt[3]{a} \cdot \eta_G} \geq 10^{-9} \qquad \text{Formel (3)},$$

in der die folgende Parameter enthalten sind:

$\rho_G$:     Dichte des Transportgases bei 20°C [kg/m$^3$];

$\eta_{DM}$     dynamische Viskosität des Dichtmittels bei 20°C [kg/(m·s)], gemessen bei 20 °C mittels ASTM D7042 und Stabinger-Viskometer;

$v_G$:     Fließgeschwindigkeit der zur Verteilervorrichtung zugeführten Gas- bzw. Druckluftmenge [m/s], gemessen nach ASTM D3154 - 14;

$V_{DM}$:     Volumenstrom der zur Verteilervorrichtung zugeführten Dichtmittelmenge [m$^3$/s], gemessen nach ISO 1217, Anhang C;

$D$:     Durchmesser der Zuführöffnungen [m];

$\gamma_{DM}$:     Oberflächenspannung des Dichtmittels bei 20°C und Normaldruck [kg/s$^2$], gemessen nach ASTM D1331 - 14 (Methode A),

a:     Anzahl der Zuführöffnungen, und

$\eta_G$:     dynamische Viskosität des Transportgases bei 20°C [kg/(m·s)], gemessen bei 20 °C mittels Rankine-Viskosimeters bei Normaldruck gemäß G. Meerlender, Rheologica Acta, (1965), 4, (1): Seiten 21-36.

Zu Formel (3) gilt das vorstehend Gesagte.

Bevorzugt ist ein Verfahren wie vorstehend beschreiben oder wie vorstehend als bevorzugt beschreiben,

- wobei der Massenstrom des Dichtmittels des Aerosols

    - im Dichtmitteltransportkanal und/oder, bevorzugt und,
    - in den Fahrzeugluftreifen hinein und/oder, bevorzugt und,
    - in den aufblasbaren technischen Gummiartikel hinein

    zumindest teilweise im Bereich von 0,001 g/s bis 10 g/s ist, bezogen auf das Gesamtgewicht des Dichtmittels, besonders bevorzugt im Bereich von 0,1 g/s bis 1,5 g/s,

    - wobei bevorzugt der Massenstrom des Dichtmittels des Aerosols im Dichtmitteltransportkanal während Schritt B-C) im Bereich von 0,001 g/s bis 10 g/s ist, bezogen auf das Gesamtgewicht des Dichtmittels, besonders bevorzugt von 0,01 g/s bis 1,5 g/s.

Ein Vorteil des vorstehend beschriebenen Aspekts ist, dass in den vorstehend beschriebenen Bereichen des Massenstroms des Dichtmittels Fahrzeugluftreifen oder aufblasbaren technischen Gummiartikel besonders gut abgedichtet werden können. Der Grund hierfür ist häufig, dass in diesen Massenstrombereichen eine besonders gute Aerosolausbeute vorliegt. Dies gilt insbesondere, wenn dem Dichtmitteltransportkanal ein Tire Connector folgt, da der vorstehend beschriebene Massenstrom die vorstehend beschrieben vorteilhaften Aerosolpartikelgrößenverteilungen hervorbringt.

Bevorzugt ist ein Verfahren wie vorstehend beschreiben oder wie vorstehend als bevorzugt beschreiben, wobei

- der Volumenstrom des Aerosols in den Fahrzeugluftreifen hinein oder in den aufblasbaren technischen Gummiartikel hinein im Bereich von 0,00001 l/s bis 0,1 1/s ist, bezogen auf das Gesamtvolumen des Aerosols, besonders bevorzugt im Bereich von 0,0001 l/s bis 0,01 1/s, oder wobei
- die Fließgeschwindigkeit des Aerosols im Dichtmitteltransportkanal während Schritt B-C) zumindest teilweise im Bereich von 1 m/s bis 100 m/s ist, besonders bevorzugt im Bereich von 10 m/s bis 50 m/s.

Ein Vorteil des vorstehend beschriebenen Aspekts ist, dass in den vorstehend beschriebenen Bereichen des Volumenstroms der Druckluft oder eines anderen Trägergases Fahrzeugluftreifen oder aufblasbaren technischen Gummiartikel besonders gut abgedichtet werden können. Der Grund hierfür ist häufig, dass in diesen Volumenstrombereichen eine besonders gute Aerosolausbeute vorliegt. Dies gilt insbesondere, wenn dem Dichtmitteltransportkanal ein Tire Connector folgt, da der vorstehend beschriebene Volumenstrom, insbesondere in Kombination mit den vorstehend beschriebenen Massenströmen, die vorstehend beschrieben vorteilhaften Aerosolpartikelgrößenverteilungen hervorbringt.

Bevorzugt ist ein Verfahren wie vorstehend beschreiben oder wie vorstehend als bevorzugt beschreiben, wobei das Aerosol in Schritt B) mittels der Dosiereinheit durch Zuführen des Dichtmittels in einen oder in den Gasstrom des Trägergases im Dichtmitteltransportkanal erzeugt wird. Bevorzugt ist das Trägergas Druckluft aus einem Kompressor oder einer anderen Druckluftquelle.

Bevorzugt ist ein Verfahren wie vorstehend beschreiben oder wie vorstehend als bevorzugt beschreiben, wobei während Schritt C)

- der Abdichtdruck im Fahrzeugluftreifen zumindest teilweise im Bereich von 0,5 bar bis 3 bar liegt und/oder
- der hydrodynamischen Druck des Volumenstroms des Aerosols im Dichtmitteltransportkanal zumindest teilweise im Bereich von 0,2 bar bis 8 bar liegt.

Der Abdichtdruck im Fahrzeugluftreifen ist im Rahmen der vorliegenden Erfindung der Druck, welcher während des Einströmens des Aerosols in den Fahrzeugluftreifen mit Leckage mit einem handelsüblichen Manometer gemessen werden kann.

Ein Vorteil des vorstehend beschriebenen Aspekts ist, dass in den vorstehend beschriebenen Druckbereichen das Abdichten eine in einem Reifen oder in einem aufblasbaren technischen Gummiartikel besonders effektiv gelingt. Der Grund hierfür ist häufig, dass in diesen Druckbereichen eine besonders gute Aerosolausbeute vorliegt. Dies gilt insbesondere, wenn dem Dichtmitteltransportkanal ein Tire Connector folgt, da die vorstehend beschriebenen Druckbereiche die vorstehend beschrieben vorteilhaften Aerosolpartikelgrößenverteilungen hervorbringt.

In besonderem Maße bevorzugt ist ein Verfahren wie vorstehend beschreiben, umfassend die folgenden Schritte:

A) Bereitstellen oder Herstellen

- eines Systems wie vorstehend beschreiben oder wie vorstehend als bevorzugt beschreiben,
- eines Dichtmittels in dem Dichtmittelbehälter und
- eines Fahrzeugluftreifens mit Leckage oder eines aufblasbaren technischen Gummiartikels mit Leckage,

B) Leiten des Dichtmittels und einem Gas wie Druckluft durch die Verteilervorrichtung des Systems in den Fahrzeugluftreifen mit Leckage oder in den aufblasbaren technischen Gummiartikel mit Leckage,

B-C) Leiten des Aerosols vom Dichtmitteltransportkanal der Verteilervorrichtung in einen Fahrzeugluftreifen mit Leckage

C) zumindest teilweises Abdichten des Fahrzeugluftreifens mit Leckage oder des aufblasbaren technischen Gummiartikels mit Leckage,

wobei

- in Schritt B) durch Zuführen des Dichtmittels mittels der Dosiereinheit in den Dichtmitteltransportkanal ein Aerosol bestehend aus Dichtmitteltropfen und dem Gas erzeugt wird,
- der Fahrzeugluftreifen oder der aufblasbare technische Gummiartikel während des Schrittes C) und/oder zeitlich zwischen den Schritten B) und C) nicht bewegt wird, insbesondere nicht rotiert wird,
- mindestens 50 Gew.-% der Dichtmitteltropfen des in Schritt B) erzeugten Aerosols einen Partikeldurchmesser im Bereich von 1 μm bis 100 μm aufweisen,
- der Massenstrom des Dichtmittels des Aerosols in den Fahrzeugluftreifen hinein im Bereich von 0,01 g/s bis 10 g/s ist, bezogen auf das Gesamtgewicht des Dichtmittels, und der Volumenstrom des Aerosols in den Fahrzeugluftreifen hinein im Bereich von 0,01 l/s bis 1,5 l/s ist, bezogen auf das Gesamtvolumen des Aerosols, und
- während Schritt C) der Abdichtdruck im Fahrzeugreifen im Bereich von 0,2 bar bis 8 bar liegt.

**Figurenbeschreibung:**

Es zeigt:

Figur 1: Vogelperspektive auf eine schematisch dargestellte erfindungsgemäße Verteilervorrichtung, wobei die Bildebene parallel zur Transportrichtung des Aerosols im Dichtmitteltransportkanal und senkrecht zur Zuführrichtung des Dichtmittels durch die Dosiereinheit verläuft;

Figur 2: Querschnittsansicht auf eine schematisch dargestellte erfindungsgemäße Verteilervorrichtung, wobei die Querschnittsebene entlang des Schnitts A-A wie in Figur1 gezeigt verläuft;

Figur 3: Schematische Übersicht über ein erfindungsgemäßes System angeschlossenen über ein Reifenventil an einen Fahrzeugluftreifen.

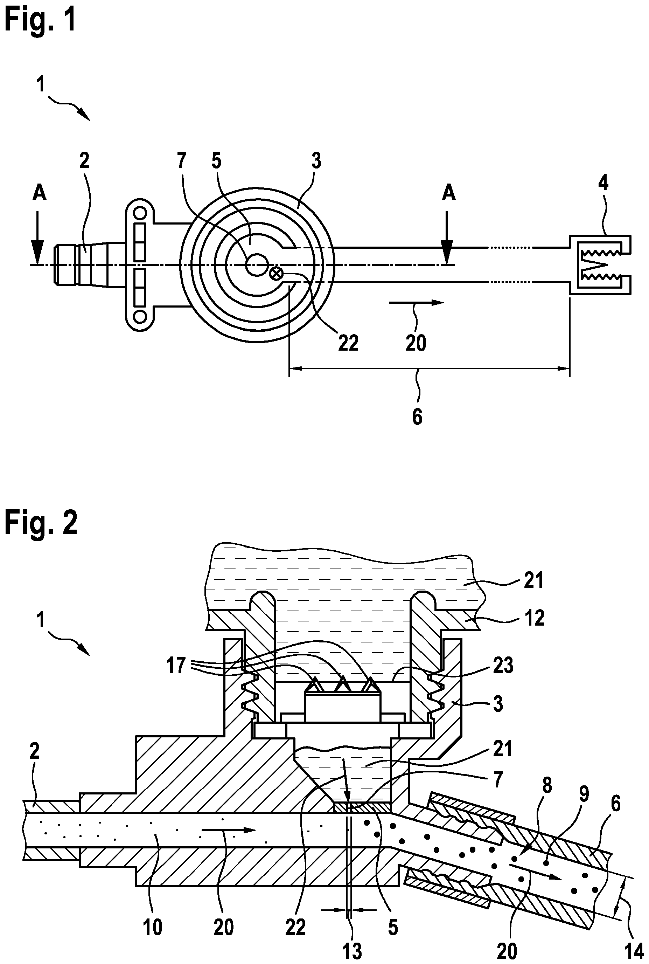

Figur 1 zeigt aus der Vogelperspektive eine schematische Darstellung einer erfindungsgemäßen Verteilervorrichtung 1 in einer ersten Ausführungsform, wobei die Querschnittebene parallel zur Transportrichtung 20 des Aerosols 8 im Dichtmitteltransportkanal 6 und senkrecht zur Zuführrichtung 23 des Dichtmittels verläuft. Die erfindungsgemäße Verteilervorrichtung 1 weist einen Gasanschluss 2, einen Dichtmittelanschluss 3 und einen Tire Connector 4 sowie einen Dichtmitteltransportkanal 6 auf. Der Dichtmittelanschluss 3 ist schematisch aus der Vogelperspektive dargestellt und ist ringförmig, damit ein nicht dargestellte Dichtmittelbehälter so auf den Dichtmittelanschluss 3 aufgeschraubt werden kann, dass er sich die Öffnung des Dichtmittelbehälters über der Dosiereinheit 5 mit der Zuführöffnung 7 befindet. Die in Figur 1 dargestellte Verteilervorrichtung 1 umfasst keine Öffnungseinheit zum Öffnen eines Dichtmittelbehälters, so dass ein nicht dargestellte Dichtmittelbehälter vor dem Befestigen auf den Dichtmittelanschluss 3 so geöffnet werden müsste, dass das Dichtmittel aus dem Dichtmittelbehälter in die Verteilervorrichtung 1 fließen oder zugeführt werden kann.

Figur 2 zeigt eine schematische Darstellung einer Querschnittsansicht auf eine erfindungsgemäße Verteilervorrichtung 1 in einer weiteren Ausführungsform, wobei die Querschnittsebene entlang des Schnitts A-A wie in Figur 1 gezeigt verläuft. Die erfindungsgemäße Verteilervorrichtung 1 weist einen Gasanschluss 2, einen Dichtmittelanschluss 3 und einen in Figur 2 nicht dargestellten Tire Connector sowie einen Dichtmitteltransportkanal 6 mit einem Innendurchmesser 14 auf. In Figur 2 ist an den Dichtmittelanschluss 3 ein nur teilweise dargestellter Dichtmittelbehälter 12 aufgeschraubt, wobei der Dichtmittelbehälter 12 Dichtmittel 21 und eine Schutzfolie 23 umfasst. Gemäß der in Figur 2 dargestellten Ausführungsform der vorliegenden Erfindung wird der Dichtmittel Behälter 12 an die erfindungsgemäße Verteilervorrichtung angeschraubt, wobei die Schutzfolie 23 durch die Öffnungseinheit 17 zerstochen wird, sodass Dichtmittel 21 aufgrund der Schwerkraft aus dem Dichtmittelbehälter 12 zu der Dosiereinheit 5 der Verteilervorrichtung 1 gelangen kann. Gemäß der in Figur 2 dargestellten Ausführungsform wird das Dichtmittel 21 mithilfe der Schwerkraft dem Dichtmitteltransportkanal 6 in Zuführrichtung 32 zugeführt und anschließend durch die Druckluft 10 zerstäubt. Der Innendurchmesser 15 der Zuführöffnung 7 stellt dabei sicher, dass die dem Dichtmitteltransportkanal 6 zugeführten Dichtmittelmenge so eingestellt ist, dass im Dichtmitteltransportkanal 6 ein Aerosol 8 entsteht. Das Aerosol 8 besteht hierbei aus Aerosolpartikel 9 und der Druckluft 10 als Trägergas und wird in Transportrichtung 20 über den nicht dargestellten Tire Connector zum ebenfalls nicht dargestellten Fahrzeugluftreifen transportiert. In einer weiteren erfindungsgemäßer Ausführungsform ist es auch möglich die Druckluft 10 zumindest teilweise in den Dichtmittelbehälter 12 zuleiten, umso noch größere Mengen an Dichtmittel pro Zeiteinheit in die erfindungsgemäße Verteilervorrichtung 1 zuzuführen.

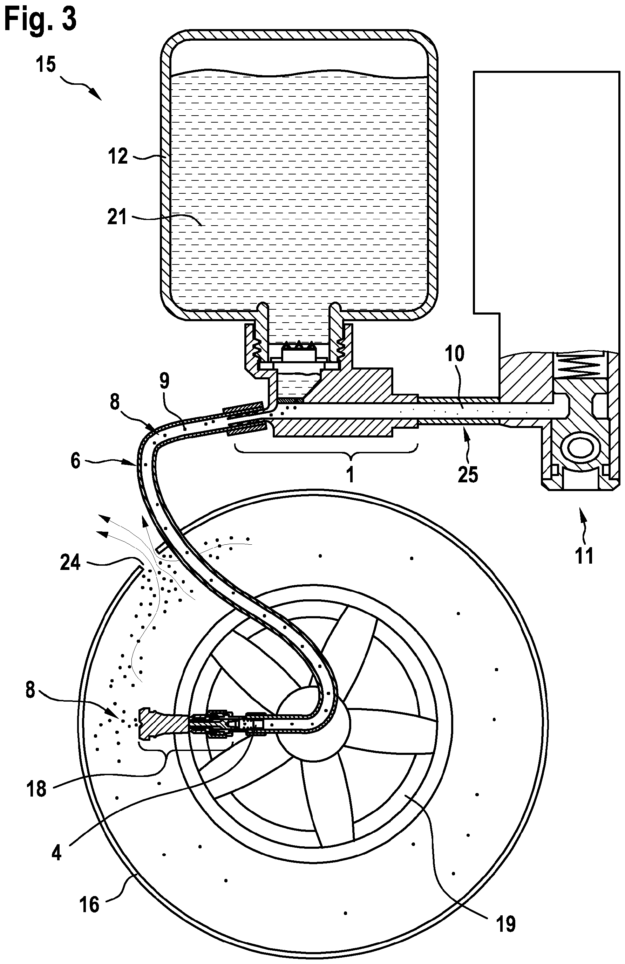

Figur 3 zeigt eine schematische Darstellung eines erfindungsgemäßen Systems 15 in einer Ausführungsform. Das erfindungsgemäße System 15 umfasst dabei einen Kompressor 11 als Druckluftquelle, welche Druckluft 10 zur erfindungsgemäßen Verteilervorrichtung 1 führt, und die erfindungsgemäße Verteilervorrichtung 1 selbst sowie einen Dichtmittelbehälter 12. In Figur 3 ist schematisch dargestellt, dass die Druckluft 10 durch einen Druckluftkanal 25 vom Kompressor 11 zur erfindungsgemäßen Verteilervorrichtung 1 geleitet wird und dort auf das Dichtmittel 21 trifft, welches aufgrund der präzise eingestellten Dosiereinheit 5 in ein Aerosol 8 mit Aerosolpartikel 9 übergeht. Das Aerosol 8 wird dann im Dichtmitteltransportkanal 6 in Transportrichtung 20 über den Tire Connector 4 und über das Reifenventil 18 in den Innenraum des Fahrzeugluftreifens 16 geführt. Im Innenraum des Fahrzeugluftreifens 16 angekommen erzeugte das Aerosol einen Abdichtdruck im Fahrzeugluftreifen 16 und verdrängt dabei vorher vorhandene Luft durch die Leckage 24. Dieser Vorgang geschieht solange bis das Aerosol 8 zur Leckage gelangt. Aufgrund der Strömungsveränderungen an der Leckage 24 setzt sich dann ein Teil des Aerosols 8 an der Oberfläche der Leckage 24 ab und dichtet die Leckage 24 somit zumindest teilweise ab. Je nachdem wieviel Aerosol 8 die Leckage 24 erreicht, kann sich dieser Prozess unter Umständen sogar so lange fortsetzen, bis die Leckage 24 vollständig mit Dichtmittel 21, welches über das Aerosol 8 zu Leckage 24 gelangt ist, abgedichtet wird.

**Experimentelle Beispiele:**

Versuchsablauf zur Bestimmung der Aerosolausbeute:

Zu Bestimmung der Aerosolausbeute einer nicht erfindungsgemäßen und einer erfindungsgemäßen Verteilervorrichtung wurden die folgenden Gegenstände verwendet:

- Pannensets mit dem Produktnamen "ContiMobilityKit" der Firma Continental als Beispiel eines erfindungsgemäßen Systems,
- zylindrischer Auffangbehälter mit einer Zylinderhöhe von 23 cm und mit einer Öffnung am oberen Ende des zylindrischen Auffangbehälters von 9 cm
- verschiedene Dosiereinheiten, welche sich in der Anzahl und/oder in dem Durchmesser der Zuführöffnungen unterschieden,
- ein herkömmliches Reifenventil ohne Reifen und

- Stativ zum Halten des "Tire Connectors" des Pannensets.

Im Folgenden wird der Versuchsablauf des Vergleichsversuches beschrieben. Die erfindungsgemäßen Versuche mit erfindungsgemäßen Verteilervorrichtungen wurden entsprechend durchgeführt, wobei im Unterschied zum Vergleichsversuch die jeweiligen Verteilervorrichtungen je eine der in Tab. 1 spezifizierten Dosiereinheiten aufwiesen.

Das herkömmliche Reifenventil wurde an den "Tire Connector" des Pannensets als Beispiel eines Verbindungselementes zur Verbindung mit einem Fahrzeugluftreifen angeschlossen und mithilfe des Stativ so oberhalb des zylindrischen Auffangbehälter als positioniert, dass das nicht mit dem Tire Connector verbundene Ende des Reifenventils sich mittig oberhalb der Öffnung des oberen Endes des zylindrischen Auffangbehälters befand und in Richtung der Öffnung des oberen Endes des zylindrischen Auffangbehälters das zeigte. Der Abstand zwischen der Öffnung des oberen Endes des zylindrischen Auffangbehälters das und dem nicht mit dem Tire Connector verbundenen Ende des Reifenventils entsprach ungefähr 10 cm.

Nun wurde der Kompressor des Pannensets mit einem Pumpdruck von 4 bar und eine Druckluftstrom mit einer Fließgeschwindigkeit von ca. 29 m/s gestartet und ein Dichtmittelbehälter, welcher ein maximales Volumen von 500 ml aufwies, wurde mit 367 g herkömmlichen Dichtmittel (Dichtmittel "AP1" der Continental AG) befüllt. Der befüllte Dichtmittelbehälter wurde nun so an dem Dichtmittelanschluss der Verteilervorrichtung des Pannensets angeschraubt, dass die 376 g herkömmlichen Dichtmittels durch den Dichtmitteltransportkanal, durch den Tire Connector und durch das Reifenventil in den Auffangbehälter transportiert wurden. Beim Austritt aus dem Reifenventil bildete sich ein Gemisch aus unterschiedlich großen Dichtmitteltropfen, welches aufgrund der Druckluft aus dem Kompressor des Pannensets in Richtung des Auffangbehälters gesprüht wurde. Waren diese Dichtmitteltropfen klein genug, dass sie ein Aerosol bildeten, so wurden solche Dichtmitteltropfen nicht in den Auffangbehälter gedrückt. Anstelle dessen wurden die aus dem Reifenventil zerstäubten Dichtmitteltropfen nach außen gedrückt und verfehlten somit den Auffangbehälter. Die restlichen Dichtmitteltropfen mit einem größeren Durchmesser wurden im Auffangbehälter aufgefangen, da sie zu schwer waren. Nachdem die gesamten 376 g herkömmlichen Dichtmittels durch das Reifenventil geleitet wurden, wurde das Gewicht der im Dichtmittelbehälter aufgefangenen Dichtmitteltropfen gemessen.

Ganz allgemein lässt sich sagen, dass je größer die im Auffangbehälter aufgefangene Menge an Dichtmittel war, desto weniger Aerosol wurde aus den anfänglichen 376 g herkömmlichen Dichtmittels gewonnen, das heißt desto schlechter war die Aerosolausbeute.

Der vorstehend beschriebene Versuchsablauf wurde entsprechend für die erfindungsgemäßen Versuche mit den erfindungsgemäßen Verteilervorrichtungen durchgeführt. Auf diese Weise wurde für die Verteilervorrichtung des Pannensets ohne Dosiereinheit (nicht erfindungsgemäß) und für jede erfindungsgemäße Verteilervorrichtung des Pannensets mit Dosiereinheit eine Aerosolausbeute bestimmt (s. Tab. 1 unten).

Die Aerosolausbeute $AB_x$ wurde dabei wie folgt berechnet:

$$\mathbf{AB_x} = 1 - \frac{m_{\text{auffang},x}}{367\,g} \qquad \text{Formel (A)}$$

wobei

- der Index **x** entweder VV (Vergleichsversuch), E1, E2 oder E3 (erfindungsgemäße Versuche) sein kann und
- $m_{\text{auffang},x}$ = die Masse [g] des im Auffangbehälter aufgefangenen Dichtmittels beim jeweiligen Versuch (VV, E1, E2 oder E3) ist.

Die Verbesserung der Aerosolausbeute $V_{AB,x}$ (in Prozent) wurde dabei wie folgt berechnet:

$$\mathbf{V_{AB,x}} = 100 \cdot \left(\frac{AB_x}{AB_{VV}} - 1\right) \qquad \text{Formel (B)}$$

wobei

- der Index **x** hierbei VV (Vergleichsversuch), E1, E2 oder E3 (erfindungsgemäße Versuche) sein kann.

Ergebnisse:

Tabelle 1: Experimentelle Daten erfindungsgemäßer und nicht erfindungsgemäßer Vorrichtungen

| Versuchsbezeichnung | Vergleichsversuch W | Erfindungsg. Versuch E1 | Erfindungsg. Versuch E2 | Erfindungsg. Versuch E3 |
|---|---|---|---|---|
| Verwendete Verteilervorrichtung umfasst eine Dosiereinheit | Nein | Ja | Ja | Ja |
| $\rho_G$ [kg/m$^3$] | 1,2 | 1,2 | 1,2 | 1,2 |
| $\eta_{DM}$ [kg/(m·s)] | 0,001 | 0,001 | 0,001 | 0,001 |
| $V_G$ [m/s] | 29 | 29 | 29 | 29 |
| $\gamma_{DM}$ [kg/s$^2$] | 75 | 75 | 75 | 75 |
| $\eta_G$ [kg/(m·s)] | 18,2 | 18,2 | 18,2 | 18,2 |
| Anzahl an Zuführöffnungen in der Dosiereinheit* | (keine Dosiereinheit vorhanden) | 2 | 1 | 4 |
| Durchmesser der Zuführöffnung (m) | --- | 0,001 | 0,001 | 0,0005 |
| Verbesserung $V_{AB}$ | 0% | 75 % | 141 % | 682 % |
| *Der Volumenstrom $V_{DM}$ der zugeführten Dichtmittelmenge war in den erfindungsgemäßen Versuchen ca. $10^{-6}$ m$^3$/s und in den Vergleichsversuch VV ca. $10^{-5}$ m$^3$/s. | | | | |

Aus Tab. 1 ist ersichtlich, dass durch die Verwendung einer Dosiereinheit in einer erfindungsgemäßen Verteilervorrichtung, wie sie in den Versuchen E 1, E2 und E3 verwendet wurde, eine deutliche Verbesserung $V_{AB}$ der Aerosolausbeute erreichen lässt. Eine besonders starke Verbesserung $V_{AB}$ der Aerosolausbeute (682%) wurde im Vergleich zu einer im Stand der Technik bekannten Verteilervorrichtung ohne Dosiereinheit im Versuch E3 erreicht. Hierbei wurde eine erfindungsgemäße Verteilervorrichtung umfassend eine Dosiereinheit, welche vier Zuführöffnungen mit jeweils einem Durchmesser von 0,5 mm aufwies, verwendet.

Beim Vergleich des Versuches E1 mit dem Versuch E2 wird ersichtlich, dass mit einer kleineren Dosiergeschwindigkeit in Versuch E2, welche von der geringeren Anzahl an Zuführöffnungen herrührt, eine Verbesserung $V_{AB}$ der Aerosolausbeute von 75 % zu 141 % erreicht werden konnte. Entsprechende Beobachtungen können bei einer gleichen Anzahl von Zuführöffnungen aber geringeren Durchmesser gemacht werden.

Bei den Versuchen E1 und E3 wurde das Produkt an Anzahl der Zuführöffnungen und dem Durchmesser der Zuführöffnungen konstant gehalten, um den Einfluss der Veränderung des Durchmessers der Zuführöffnungen bei potentiellen konstant bleibenden Dosiergeschwindigkeit zu untersuchen. Bei Vergleich der Versuche E1 und E3 wird somit ersichtlich, dass trotz der gleichen Fläche an Zuführöffnungen bei dem Versuch E3 eine deutliche Verbesserung $V_{AB}$ der Aerosolausbeute erreicht werden konnte. Es ist somit aus dem Vergleich der Versuche E1 und E3 ersichtlich, dass mithilfe von Dosiereinheiten mit Zuführöffnungen mit einem Durchmesser von kleiner als 1 mm Dichtmittel besser in ein Aerosol verwandelt werden können.

**Bezugszeichenliste:**

1    erfindungsgemäße Verteilervorrichtung
2    Gasanschluss
3    Dichtmittelanschluss
4    Verbindungselement; Tire Connector
5    Dosiereinheit
6    Dichtmitteltransportkanal
7    Zuführöffnung
8    Aerosols
9    Aerosolpartikel; Aerosoltropfen; Dichtmitteltropfen; Dichtmittelpartikel

10    Gas; Transportgas; Druckluft
11    Druckluftquelle, Kompressor
12    Dichtmittelbehälter
13    Durchmesser der Zuführöffnung
14    Innendurchmesser D des Dichtmitteltransportkanals
15    erfindungsgemäßes System zum Abdichten und Aufpumpen von Fahrzeugluftreifen
16    Fahrzeugluftreifen mit Leckage; aufblasbarer technischer Gummiartikel mit Leckage
17    Öffnungseinheit zum Öffnen des Dichtmittelbehälters
18    Reifenventil
19    Felge
20    Transportrichtung des Aerosols
21    Dichtmittels
22    Zuführrichtung des Dichtmittels durch die Dosiereinheit
23    Schutzfolie; Aluminiumfolie
24    Leckage
25    Druckluftkanal

A-A    Schnittebene aus Figur 1 für Figur 2

**Patentansprüche**

**1.** Verteilervorrichtung zur Erzeugung eines Aerosols (8) umfassend sowohl Gas (10) als auch Dichtmittel (9), wobei die Verteilervorrichtung (1)

    - mindestens einen Gasanschluss (2) zur Verbindung mit mindestens einer Druckluftquelle (11),
    - mindestens einen Dichtmittelanschluss (3) zur Verbindung mit mindestens einem Dichtmittelbehälter (12) und
    - ein oder mehr als ein Verbindungselement (4) zur Verbindung mit einem Fahrzeugluftreifen (16) oder mit einem aufblasbaren technischen Gummiartikel

aufweist,
**dadurch gekennzeichnet, dass**
die Verteilervorrichtung (1) eine Dosiereinheit (5) zum Dosieren der zur Verteilervorrichtung (1) zugeführten Dichtmittelmenge aufweist, wobei die Dosiereinheit mindestens eine Zuführöffnung zum Zuführen eines Dichtmittels in die Verteilervorrichtung aufweist, wobei die Dosiereinheit (5) so ausgebildet ist, die folgende Bedingung bzw. Formel (2) zu erfüllen

$$D_{mm} \cdot \sqrt[3]{a} \leq 10\,mm \qquad \text{Formel (2)},$$

in der die folgende Parameter enthalten sind:

    $D_{mm}$: Durchmesser (13) der Zuführöffnungen (7) [mm] und
    a: Anzahl der Zuführöffnungen (7).

**2.** Verteilervorrichtung nach Anspruch 1, wobei die Dosiereinheit (5) mindestens eine Zuführöffnung (7) zum Zuführen eines Dichtmittels in die Verteilervorrichtung (1) aufweist und die eine oder die mindestens eine Zuführöffnung (7) bevorzugt einen Durchmesser (13) im Bereich von 0,01 mm bis 10 mm, bevorzugt einen Durchmesser (13) Bereich von 0,1 mm bis 5 mm, besonders bevorzugt einen Durchmesser (13) im Bereich von 0,1 mm bis 1,5 mm, ganz besonders bevorzugt einen Durchmesser (13) im Bereich von 0,1 mm bis 1 mm.

**3.** Verteilervorrichtung nach einem der vorangehenden Ansprüche, wobei die Dosiereinheit (5) so ausgebildet ist, dass

    - die Anzahl der Zuführöffnungen (7) und/oder der Durchmesser (13) der einen oder der mindestens einen Zuführöffnung (7) verändert werden kann,
    - ein Aerosol (8) umfassend Dichtmitteltropfen (9) und ein Gas (10) entsteht, bevorzugt sodass ein Aerosol (8) umfassend Dichtmitteltropfen (9) und ein Gas (10) im Dichtmitteltransportkanal (6) der Verteilervorrichtung (1) entsteht,
und/oder
- die Dosiergeschwindigkeit der zur Verteilervorrichtung (1) zugeführten Dichtmittelmenge eingestellt werden kann.

4. Verteilervorrichtung nach einem der vorangehenden Ansprüche, wobei die Dosiereinheit (5) in oder an dem Dichtmittelanschluss (3) angeordnet ist und/oder die Verteilervorrichtung (1) einen Dichtmitteltransportkanal (6) zum Transport eines Aerosols (8) von der Dosiereinheit (5) zum einen oder mehr als einem Verbindungselement (4) aufweist.

5. System zum Abdichten und Aufpumpen von Fahrzeugluftreifen (16), umfassend

   - eine Verteilervorrichtung (1) nach einem der vorangehenden Ansprüche,
   - mindestens eine Druckluftquelle (11) zur Erzeugung eines Abdichtdrucks oder eines Pumpdrucks und
   - mindestens einen Dichtmittelbehälter (12) zur Aufnahme eines Dichtmittels und/oder eines Gases (10).

6. Verwendung einer Dosiereinheit (5) wie in einem der vorangehenden Ansprüche definiert oder einer Verteilervorrichtung (1) wie in den Ansprüchen 1 bis 5 definiert oder eines Systems (15) wie in Anspruch 6 definiert

   - zum Erzeugen eines Aerosols (8) umfassend Dichtmitteltropfen (9) und Gas (10), wobei das erzeugte Aerosol (8) bevorzugt in einen Fahrzeugluftreifen (16) oder in einen aufblasbaren technischen Gummiartikel geleitet wird, und/oder
   - zum Erzeugen eines Aerosols (8) zum Abdichten von Fahrzeugluftreifen (16) oder aufblasbaren technischen Gummiartikel, wobei das erzeugte Aerosol (8) bevorzugt in einen Fahrzeugluftreifen (16) oder in einen aufblasbaren technischen Gummiartikel geleitet wird.

7. Verfahren zum Abdichten von Fahrzeugluftreifen oder aufblasbaren technischen Gummiartikeln, umfassen die folgenden Schritte:

   A) Bereitstellen oder Herstellen

      - eines Systems (15) wie in Anspruch 6 definiert,
      - eines Dichtmittels in dem Dichtmittelbehälter (12) und
      - eines Fahrzeugluftreifens (16) mit Leckage oder eines aufblasbaren technischen Gummiartikels mit Leckage,

   B) Leiten des Dichtmittels und einem Gas (10) wie beispielsweise Druckluft durch die Verteilervorrichtung (1) des Systems (15) in den Fahrzeugluftreifen (16) mit Leckage oder in den aufblasbaren technischen Gummiartikel mit Leckage,
   C) zumindest teilweises Abdichten des Fahrzeugluftreifens (16) mit Leckage oder des aufblasbaren technischen Gummiartikels mit Leckage.

8. Verfahren nach Anspruch 8, wobei der Fahrzeugluftreifen (16) oder der aufblasbare technische Gummiartikel während des Schrittes C) und/oder zeitlich zwischen den Schritten B) und C) nicht bewegt wird, insbesondere nicht rotiert wird.

9. Verfahren nach einem der Ansprüche 8 bis 9, wobei in Schritt B) durch Zuführen des Dichtmittels mittels der Dosiereinheit (5) in den Dichtmitteltransportkanal (6) ein Aerosol (8) bestehend aus Dichtmitteltropfen (9) und dem Gas (10) erzeugt wird.

10. Verfahren nach Anspruch 10, wobei mindestens 50 Gew.-% der Aerosolpartikel (9) des in Schritt B) in den Fahrzeugluftreifen (16) mit Leckage oder in den aufblasbaren technischen Gummiartikel mit Leckage geleiteten Aerosols (8) einen Partikeldurchmesser im Bereich von 0,01 $\mu$m bis 500 $\mu$m aufweisen, bevorzugt im Bereich von 1 $\mu$m bis 100 $\mu$m.

11. Verfahren nach einem der Ansprüche 8 bis 11, wobei die folgende Bedingung bzw. Formel (1) erfüllt ist

$$\frac{\rho_G \cdot v_G \cdot V_{DM}}{D \cdot \gamma_{DM} \cdot \sqrt[3]{a}} \geq 10^{-5} \qquad \text{Formel (1),}$$

in der die folgende Parameter enthalten sind:

$\rho_G$: Dichte des Transportgases bei 20°C [kg/m$^3$];
$v_G$: Fließgeschwindigkeit der zur Verteilervorrichtung zugeführten Gasbzw. Druckluftmenge [m/s], gemessen nach ASTM D3154 - 14;
$V_{DM}$: Volumenstrom der zur Verteilervorrichtung zugeführten Dichtmittelmenge [m$^3$/s], gemessen nach ISO 1217, Anhang C;
$D$: Durchmesser der Zuführöffnungen [m];
$\gamma_{DM}$: Oberflächenspannung des Dichtmittels bei 20°C und Normaldruck [kg/s$^2$], gemessen nach ASTM D1331 - 14 (Methode A),
und
a: Anzahl der Zuführöffnungen (7).

12. Verfahren nach einem der Ansprüche 8 bis 12, wobei während Schritt C)

- der Abdichtdruck im Fahrzeugluftreifen (16) zumindest teilweise im Bereich von 0,5 bar bis 3 bar liegt und/oder
- der hydrodynamischen Druck des Volumenstroms des Aerosols (8) im Dichtmitteltransportkanal (6) zumindest teilweise im Bereich von 0,2 bar bis 8 bar liegt.

**Claims**

1. Distributor device for generating an aerosol (8) comprising both gas (10) and sealant (9), wherein the distributor device (1) has

   - at least one gas connector (2) for connection to at least one compressed-air source (11),
   - at least one sealant connector (3) for connection to at least one sealant container (12), and
   - one or more than one connecting element (4) for connection to a pneumatic vehicle tyre (16) or to an inflatable technical rubber article,

   **characterized in that**
   the distributor device (1) has a metering unit (5) for metering the sealant quantity fed to the distributor device (1), wherein the metering unit has at least one feed opening for feeding a sealant into the distributor device, wherein the metering unit (5) is designed to satisfy the following condition or formula (2): $D_{mm} \cdot \sqrt[3]{a} \leq 10\ mm$ formula (2), which comprises the following parameters:

   $D_{mm}$: diameter (13) of the feed openings (7) [mm] and
   a: number of feed openings (7).

2. Distributor device according to Claim 1, wherein the metering unit (5) has at least one feed opening (7) for feeding a sealant into the distributor device (1), and the one or the at least one feed opening (7) preferably has a diameter (13) in the range from 0.01 mm to 10 mm, preferably a diameter (13) in the range from 0.1 mm to 5 mm, particularly preferably a diameter (13) in the range from 0.1 mm to 1.5 mm, very particularly preferably a diameter (13) in the range from 0.1 mm to 1 mm.

3. Distributor device according to one of the preceding claims, wherein the metering unit (5) is designed such that

   - the number of feed openings (7) and/or the diameter (13) of the one or of the at least one feed opening (7) can be varied,
   - an aerosol (8) comprising sealant droplets (9) and a gas (10) is formed, preferably such that an aerosol (8) comprising sealant droplets (9) and a gas (10) is formed in the sealant transport channel (6) of the distributor device (1),
and/or
- the metering rate of the sealant quantity fed to the distributor device (1) can be adjusted.

4. Distributor device according to one of the preceding claims, wherein the metering unit (5) is arranged in or on the sealant connector (3) and/or the distributor device (1) has a sealant transport channel (6) for transporting an aerosol (8) from the metering unit (5) to the one or more than one connecting element (4).

5. System for sealing and inflating pneumatic vehicle tires (16), comprising

   - a distributor device (1) according to one of the preceding claims,
   - at least one compressed-air source (11) for generating a sealing pressure or a pump pressure and
   - at least one sealant container (12) for accommodating a sealant and/or a gas (10).

6. Use of a metering unit (5) as defined in one of the preceding claims or of a distributor device (1) as defined in Claims 1 to 5 or of a system (15) as defined in Claim 6

   - for generating an aerosol (8) comprising sealant droplets (9) and gas (10), wherein the generated aerosol (8) is preferably conducted into a pneumatic vehicle tyre (16) or into an inflatable technical rubber article,
   and/or
   - for generating an aerosol (8) for sealing pneumatic vehicle tyres (16) or inflatable technical rubber articles, wherein the generated aerosol (8) is preferably conducted into a pneumatic vehicle tyre (16) or into an inflatable technical rubber article.

7. Method for sealing pneumatic vehicle tyres or inflatable technical rubber articles, comprising the following steps:

   A) providing or producing

      - a system (15) as defined in Claim 6,
      - a sealant in the sealant container (12) and
      - a pneumatic vehicle tyre (16) with a leak or an inflatable technical rubber article with a leak,

   B) conducting the sealant and a gas (10), for example compressed air, through the distributor device (1) of the system (15) into the pneumatic vehicle tyre (16) with a leak or into the inflatable technical rubber article with a leak,
   C) at least partially sealing the pneumatic vehicle tyre (16) with a leak or the inflatable technical rubber article with a leak.

8. Method according to Claim 8, wherein the pneumatic vehicle tyre (16) or the inflatable technical rubber article is not moved, in particular is not rotated, during step C) and/or in the time between steps B) and C).

9. Method according to either of Claims 8 and 9, wherein, in step B), an aerosol (8) composed of sealant droplets (9) and the gas (10) is generated by feeding the sealant into the sealant transport channel (6) by means of the metering unit (5).

10. Method according to Claim 10, wherein at least 50 wt.% of the aerosol particles (9) of the aerosol (8) conducted in step B) into the pneumatic vehicle tyre (16) with a leak or into the inflatable technical rubber article with a leak have a particle diameter in the range from 0.01 $\mu$m to 500 $\mu$m, preferably in the range from 1 $\mu$m to 100 $\mu$m.

11. Method according to one of Claims 8 to 11, wherein the following condition or formula (1) is satisfied:

$$\frac{\rho_G \cdot v_G \cdot V_{DM}}{D \cdot \gamma_{DM} \cdot \sqrt[3]{a}} \geq 10^{-5} \qquad \text{formula (1),}$$

which comprises the following parameters:

$\rho_G$: density of the transport gas at 20°C [kg/m$^3$];

$v_G$: flow rate of the gas or compressed-air quantity fed to the distributor device [m/s], measured in accordance with ASTM D3154 - 14;

$V_{DM}$: volume flow of the sealant quantity fed to the distributor device [m³/s], measured in accordance with ISO 1217, annex C;

D: diameter of the feed openings [m];

$\gamma_{DM}$: surface tension of the sealant at 20°C and normal pressure [kg/s²], measured in accordance with ASTM D1331 - 14 (method A),

and

a: number of feed openings (7).

**12.** Method according to one of Claims 8 to 12, wherein, during step C),

- the sealing pressure in the pneumatic vehicle tyre (16) is at least partially in the range from 0.5 bar to 3 bar and/or
- the hydrodynamic pressure of the volume flow of the aerosol (8) in the sealant transport channel (6) is at least partially in the range from 0.2 bar to 8 bar.


**Revendications**

**1.** Dispositif de distribution pour produire un aérosol (8) comprenant à la fois un gaz (10) et un agent d'étanchéité (9), le dispositif de distribution (1) présentant

- au moins un raccord de gaz (2) pour la connexion à au moins une source d'air comprimé (11),
- au moins un raccord d'agent d'étanchéité (3) pour la connexion à au moins un réservoir d'agent d'étanchéité (12) et
- un ou plusieurs éléments de connexion (4) pour la connexion à un pneumatique de véhicule (16) ou à un article technique en caoutchouc gonflable, **caractérisé en ce que**

le dispositif de distribution (1) présente une unité de dosage (5) pour doser la quantité d'agent d'étanchéité amenée au dispositif de distribution (1), l'unité de dosage présentant au moins une ouverture d'amenée pour amener un agent d'étanchéité dans le dispositif de distribution, l'unité de dosage (5) étant configurée pour satisfaire la condition ou formule (2) suivante

$$D_{mm} \cdot \sqrt[3]{a} \leq 10 \, mm \quad \text{Formule (2)},$$

dans laquelle les paramètres suivants sont inclus :

$D_{mm}$: diamètre (13) des ouvertures d'amenée (7) [mm] et
a : nombre d'ouvertures d'amenée (7).

**2.** Dispositif de distribution selon la revendication 1, dans lequel l'unité de dosage (5) présente au moins une ouverture d'amenée (7) pour l'amenée d'un agent d'étanchéité dans le dispositif de distribution (1) et l'une ou l'au moins une ouverture d'amenée (7) présente de préférence un diamètre (13) dans la plage de 0,01 mm à 10 mm, de préférence un diamètre (13) dans la plage de 0,1 mm à 5 mm, de manière particulièrement préférée un diamètre (13) dans la plage de 0,1 mm à 1,5 mm, de manière tout particulièrement préférée un diamètre (13) dans la plage de 0,1 mm à 1 mm.

**3.** Dispositif de distribution selon l'une quelconque des revendications précédentes, dans lequel l'unité de dosage (5) est configurée de telle sorte que

- le nombre d'ouvertures d'amenée (7) et/ou le diamètre (13) de l'une ou des au moins une ouverture d'amenée (7) peuvent être modifiés,
- un aérosol (8) comprenant des gouttes d'agent d'étanchéité (9) et un gaz (10) se forme, de préférence de telle sorte qu'un aérosol (8) comprenant des gouttes d'agent d'étanchéité (9) et un gaz (10) se forme dans le canal de transport d'agent d'étanchéité (6) du dispositif de distribution (1),

et/ou
- la vitesse de dosage de la quantité d'agent d'étanchéité amenée au dispositif de distribution (1) peut être réglée.

4. Dispositif de distribution selon l'une quelconque des revendications précédentes, dans lequel l'unité de dosage (5) est agencée dans ou sur le raccord d'agent d'étanchéité (3) et/ou le dispositif de distribution (1) présente un canal de transport d'agent d'étanchéité (6) pour transporter un aérosol (8) de l'unité de dosage (5) vers un ou plus d'un élément de connexion (4).

5. Système d'étanchéification et de gonflage de pneumatiques de véhicule (16), comprenant

   - un dispositif de distribution (1) selon l'une quelconque des revendications précédentes,
   - au moins une source d'air comprimé (11) pour produire une pression d'étanchéification ou une pression de pompage, et
   - au moins un réservoir d'agent d'étanchéité (12) pour recevoir un agent d'étanchéité et/ou un gaz (10).

6. Utilisation d'une unité de dosage (5) telle que définie dans l'une quelconque des revendications précédentes ou d'un dispositif de distribution (1) tel que défini dans les revendications 1 à 5 ou d'un système (15) tel que défini dans la revendication 6

   - pour produire un aérosol (8) comprenant des gouttes d'agent d'étanchéité (9) et un gaz (10), l'aérosol produit (8) étant de préférence dirigé dans un pneumatique de véhicule (16) ou dans un article technique en caoutchouc gonflable,
   et/ou
   - pour produire un aérosol (8) pour étanchéifier des pneumatiques de véhicule (16) ou des articles techniques en caoutchouc gonflables, l'aérosol produit (8) étant de préférence dirigé dans un pneumatique de véhicule (16) ou dans un article technique en caoutchouc gonflable.

7. Procédé d'étanchéification de pneumatiques de véhicules ou d'articles techniques en caoutchouc gonflables, comprenant les étapes suivantes :

   A) la fourniture ou la fabrication

      - d'un système (15) tel que défini dans la revendication 6,
      - d'un agent d'étanchéité dans le réservoir d'agent d'étanchéité (12) et
      - d'un pneumatique de véhicule (16) présentant une fuite ou d'un article technique en caoutchouc gonflable présentant une fuite,

   B) la direction de l'agent d'étanchéité et d'un gaz (10) tel que par exemple de l'air comprimé à travers le dispositif de distribution (1) du système (15) dans le pneumatique de véhicule (16) présentant une fuite ou dans l'article technique en caoutchouc gonflable présentant une fuite,
   C) l'étanchéification au moins partielle du pneumatique de véhicule (16) présentant une fuite ou de l'article technique en caoutchouc gonflable présentant une fuite.

8. Procédé selon la revendication 8, dans lequel le pneumatique de véhicule (16) ou l'article technique en caoutchouc gonflable n'est pas déplacé, notamment n'est pas tourné, pendant l'étape C) et/ou dans le temps entre les étapes B) et C).

9. Procédé selon l'une quelconque des revendications 8 à 9, dans lequel, à l'étape B), un aérosol (8) constitué de gouttes d'agent d'étanchéité (9) et du gaz (10) est produit en amenant l'agent d'étanchéité au moyen de l'unité de dosage (5) dans le canal de transport d'agent d'étanchéité (6).

10. Procédé selon la revendication 10, dans lequel au moins 50 % en poids des particules d'aérosol (9) de l'aérosol (8) dirigé dans le pneumatique de véhicule (16) présentant une fuite ou dans l'article technique en caoutchouc gonflable présentant une fuite à l'étape B) présentent un diamètre de particule dans la plage de 0,01 $\mu$m à 500 $\mu$m, de préférence dans la plage de 1 $\mu$m à 100 $\mu$m.

11. Procédé selon l'une quelconque des revendications 8 à 11, dans lequel la condition ou formule (1) suivante est satisfaite

$$\frac{\rho_G \cdot v_G \cdot V_{DM}}{D \cdot \gamma_{DM} \cdot \sqrt[3]{a}} \geq 10^{-5} \qquad \text{Formule (1),}$$

dans laquelle les paramètres suivants sont inclus :

$\rho G$: densité du gaz transporté à 20 °C [kg/m³] ;
$v_G$: vitesse d'écoulement de la quantité de gaz ou d'air comprimé amenée au dispositif de distribution [m/s], mesurée selon la norme ASTM D3154 - 14 ;
$V_{DM}$: courant volumique de la quantité d'agent d'étanchéité amenée au dispositif de distribution [m³/s], mesuré selon la norme ISO 1217, annexe C ;
D : diamètre des ouvertures d'amenée [m] ;
$\gamma_{DM}$: tension superficielle de l'agent d'étanchéité à 20 °C et à pression normale [kg/s²], mesurée selon la norme ASTM D1331 - 14 (méthode A),
et
a : nombre d'ouvertures d'amenée (7).

**12.** Procédé selon l'une quelconque des revendications 8 à 12, dans lequel, pendant l'étape C)

- la pression d'étanchéité dans le pneumatique de véhicule (16) se situe au moins partiellement dans la plage de 0,5 bar à 3 bars
et/ou
- la pression hydrodynamique du courant volumique de l'aérosol (8) dans le canal de transport d'agent d'étanchéité (6) se situe au moins partiellement dans la plage de 0,2 bar à 8 bars.

EP 3 877 163 B1

**Fig. 1**

1

2  7  5  3

A                    A                    4

22        20

6

**Fig. 2**

21
12

1

17                    23
3

2                    21
7

8  9  6

10  20  22  5        20  14
13

23

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016209302 A1

- EP 1419876 A2

**In der Beschreibung aufgeführte Nicht-Patentliteratur**

- **G. MEERLENDER.** *Rheologica Acta,* 1965, vol. 4 (1), 21-36